# EUROPEAN PATENT APPLICATION

(11) **EP 1 349 330 A1**
(43) Date of publication of application: **01.10.2003**
(21) Application number: 02360094.3
(22) Date of filing: 20.03.2002
(51) Int. Cl.: H04L 12/56

(54) **A method for operating a mobile communication device**

(71) Applicant: ALCATEL, 75008 Paris (FR)
(72) Inventor: Bazin, Claire, 75014 Paris (FR)
(74) Representative: Richardt, Markus Albert

(57) **Abstract**

The invention relates to a method for operating a mobile communication device, the method comprising the steps of:
- setting the mobile communication device (32) into a discoverable mode,
- entering a communication zone (50), the zone (50) being delimited by at least one access point (54,55), the access point (54,55) being adapted to discover the mobile communication device (32), when the mobile communication device (32) is in the discoverable mode,
- performing an inquiry scan in response to the entry into the communication zone (50) in order to identify one or more other communication devices (32) with which a communication link can be established.

## Description

### Field of the invention

The present invention relates in general to the field of mobile communication and in particular, by way of example but not limitation, to portable battery-operated electronic devices, such as Bluetooth communication devices.

### Background and prior art

Mobile communication devices are usually powered by small, rechargeable batteries that normally provide a limited number of hours of active service. A number of power saving techniques have been devised in the prior art with a goal to extend the number of hours of active service.

US 6,323,775 shows a method for proximity-based recharge notification. A user is notified of a low battery condition when the remaining battery capacity of a portable electronic device, such as a mobile station, pager, portable computer, video camera, or personal digital assistant, falls below a predetermined level and the portable electronic device is proximally located to a corresponding charging unit. The proximity of the portable electronic device to the charging unit may be detected by using geographic positioning, such as the GPS, the GLONASS or the GSM location-determining algorithms, or by monitoring a short range radio interface, such as Bluetooth or Home RF.

Bluetooth is a protocol designed for short range communication. The Bluetooth protocol is described in Bluetooth specification, volumes 1 and 2, version 1.1, February 22, 2001 available at www.bluetooth.com.

A Bluetooth device can have a variety of modes. One of the modes is the inquiry mode where an inquiring Bluetooth device scans its environment in order to identify other Bluetooth devices.

The "discoverability modes" constitute another category of modes. With respect to an inquiry, a Bluetooth device is either in a non-discoverable mode or in a discoverable mode. When a Bluetooth device is in a non-discoverable mode it does not response to inquiry.

In the Bluetooth standard there are two different discoverable modes which are called "limited discoverable mode" and "general discoverable mode".

A Bluetooth device is said to be made discoverable, or set into a discoverable mode, when it is in limited discoverable mode or in general discoverable mode.

The limited discoverable mode is used by devices that need to be discoverable only for a limited period of time, during temporary conditions or for a specific event. The purpose is to respond to a device that makes a limited inquiry. The scanning for the limited inquiry access code can be done either in parallel or in sequence with the scanning of the general inquiry access code.

The general discoverable mode is be used by devices that need to be discoverable continuously or for no specific condition. The purpose is to respond to a device that makes a general inquiry.

The default state of a Bluetooth communication device is passive, i.e. if the Bluetooth device needs to determine if Bluetooth services are available in its proximity it must first perform an inquiry scan of its environment to discover the inrange Bluetooth service points. This inquiry scan phase is necessary to retrieve the Bluetooth identifiers of these service points.

One mode of operating such a Bluetooth communication device is to initiate an inquiry scan only upon a corresponding user request. The disadvantage of this approach is that a manual user input operation is required. Also the user will only be notified of available Bluetooth services when he or she requires to scan the environment but no automatic notification is possible.

An alternative approach is to continuously put the Bluetooth device into the inquiry scan mode. The problem with this approach is that a Bluetooth device typically consumes about 45 times more power than in the standby discoverable mode.

### Summary of the invention

The present invention provides for a method of operating a mobile communication device, such as a Bluetooth device or another short range communication device, which enables to safe power and thus extend the battery lifetime. In brief the underlying idea of the invention is that an inquiry scan is only necessary if there are in fact service points within a zone surrounding the communication device; if it is not known that there are such service points within proximity a standby discoverable mode is sufficient. This approach enables to drastically reduce power consumption and still perform inquiry scans when they are needed.

In accordance with a first preferred embodiment of the invention a communication zone is defined. The communication zone can be an area within a building, such as a shopping mall, or a commercial street. A number of Bluetooth service points are placed within that communication zone. At the entry and the exit of the communication zone Bluetooth access points are located which delimit the communication zone at the entry and / or access points of the zone.

In accordance with a further preferred embodiment of the invention the Bluetooth service points and the Bluetooth access points of the communication zone are permanently in the inquiry mode. Typically the Bluetooth service and access points are fixed devices which are not battery operated such that the power consumption required in the inquiry scan mode does not constitute a shortcoming.

When a Bluetooth mobile communication device is located outside the communication zone it is set into a discoverable mode as a default mode. In the discoverable mode the power consumption of the mobile communication device is minimal. When a user enters the communication zone with the mobile communication device this device is recognized by the corresponding Bluetooth access point as this access point permanently scans its environment for Bluetooth devices. When the Bluetooth access point detects the mobile communication device it sends a command to the mobile communication device. In response the mobile communication device performs an inquiry scan to identify other communication devices, in particular the Bluetooth service points and / or the Bluetooth access points, within its proximity.

In accordance with a preferred embodiment of the invention the mobile communication device stays in the inquiry scan mode while it remains in the communication zone. Only when the user exits the communication zone the device is reset into the discoverable mode. The location of the mobile communication device within the communication zone can be determined by a position determination technique provided by the local positioning profile as defined in the Bluetooth specification.

Alternatively or in addition timeout techniques can be utilized. In one implementation a timer is started when the user enters the communication zone. When the timer expires the mobile communication device is automatically reset into the discoverable mode.

### Brief description of the drawings

- Figure 1: is illustrative of a first embodiment of the method for operating a mobile communication device,
- Figure 2: is illustrative of a second embodiment of the method for operating a mobile communication device,
- Figure 3: is a block diagram of a preferred implementation of a mobile communication device,
- Figure 4: is a block diagram of a preferred implementation of an access point,
- Figure 5: shows a communication system of the invention with a communication zone.

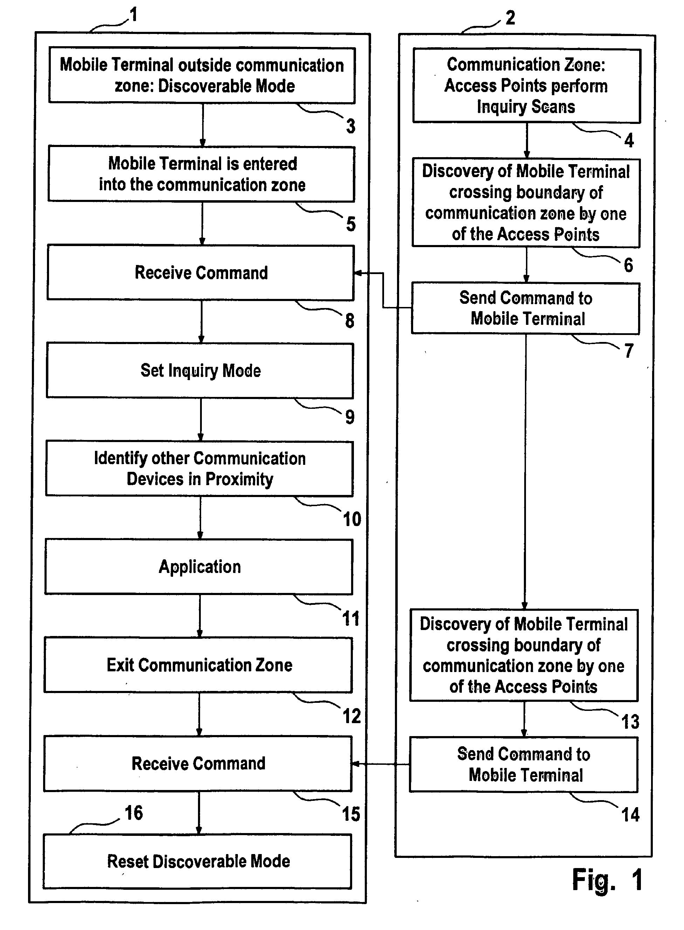

Figure 1 is illustrative of a process 1 of a mobile terminal, such as a Bluetooth mobile communication device, and a process 2 of an access point within a communication zone.

In step 3 the mobile terminal is set into the discoverable mode. This is the default mode for the mobile terminal.

On the other hand the access points of the communication zone are set into the inquiry scan mode in step 4 of process 2.

When the mobile terminal is entered into the communication zone in step 5 this is discovered by one of the access points in step 6 of the process 2 as the access points permanently or at close time intervals scan the environment.

In step 7 the access point which has discovered the mobile terminal in step 6 sends a command to the mobile terminal.

This command is received by the mobile terminal in step 8. In response the inquiry scan mode is set in the mobile terminal in step 9. This way one or more other communication devices or Bluetooth services are identified in the proximity of the mobile terminal in step 10. This enables the mobile terminal to use one or more Bluetooth applications in conjunction with the devices and / or services detected in step 10. The corresponding application or applications are carried out in step 11.

In step 12 the mobile terminal exits the communication zone. This is discovered by one of the access points of the communication zone in step 13. In step 14 a command is sent to the mobile terminal from the access point which has discovered the mobile terminal. The steps 13 and 14 are analogous to the steps 6 and 7.

The command is received by the mobile terminal in step 15. In response the mobile terminal is reset into the discoverable mode in order to safe power.

The discovery of the mobile terminal at the boundary of the communication zone in steps 6 and 13 can be done based on proximity, i.e. by means of the inquiry scan. Alternatively GPS-based techniques can be utilized in order to determine whether the mobile terminal is within the communication zone or not. As a further option the local positioning profile techniques devised in the Bluetooth specification can be employed.

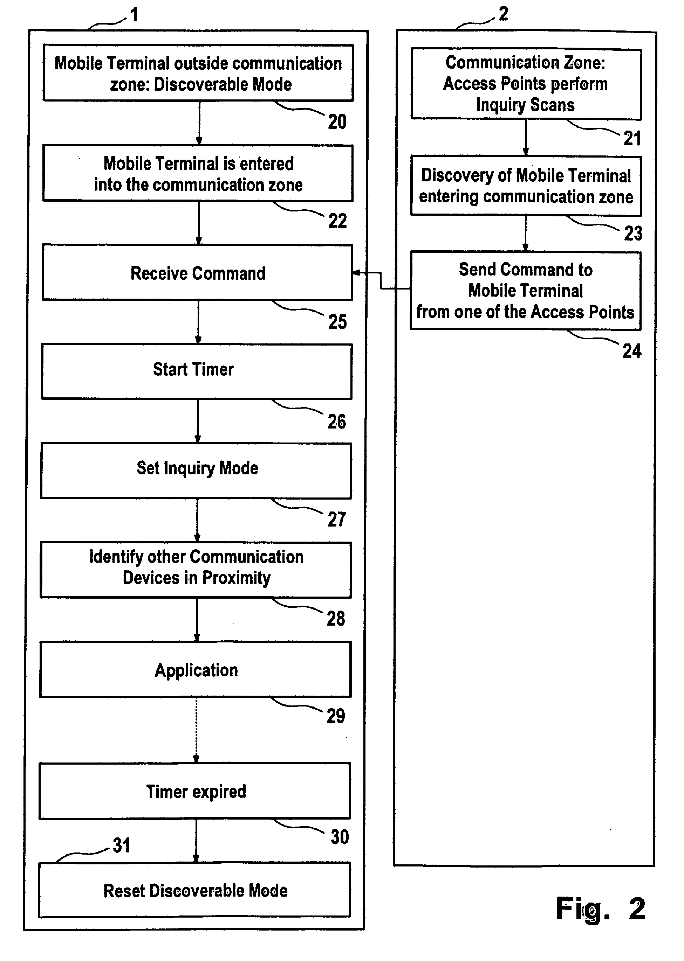

Figure 2 shows an alternative approach for implementation of the processes 1 and 2 of figure 1. Again the mobile terminal is set into the discoverable mode in step 20 and the access points of the communication zone are in the inquiry scan mode in step 21, as it is the case in the corresponding steps 3 and 4 of figure 1.

When the mobile terminal is entered into the communication zone in step 22 this is discovered within the communication zone. For example the local positioning profile techniques or GPS-based techniques are utilized within the communication zone in order to determine that the mobile terminal has entered the communication zone.

In step 24 a command is sent from one of the access points in the proximity of the mobile terminal. The mobile terminal receives this command in step 25 which starts a timer in step 26 and sets the inquiry mode in step 27. The following steps 28 and 29 are analogous to the steps 10 and 11 of figure 1.

In step 30 the timer which has been started in step 26 expires. In response the discoverable mode is reset in step 31.

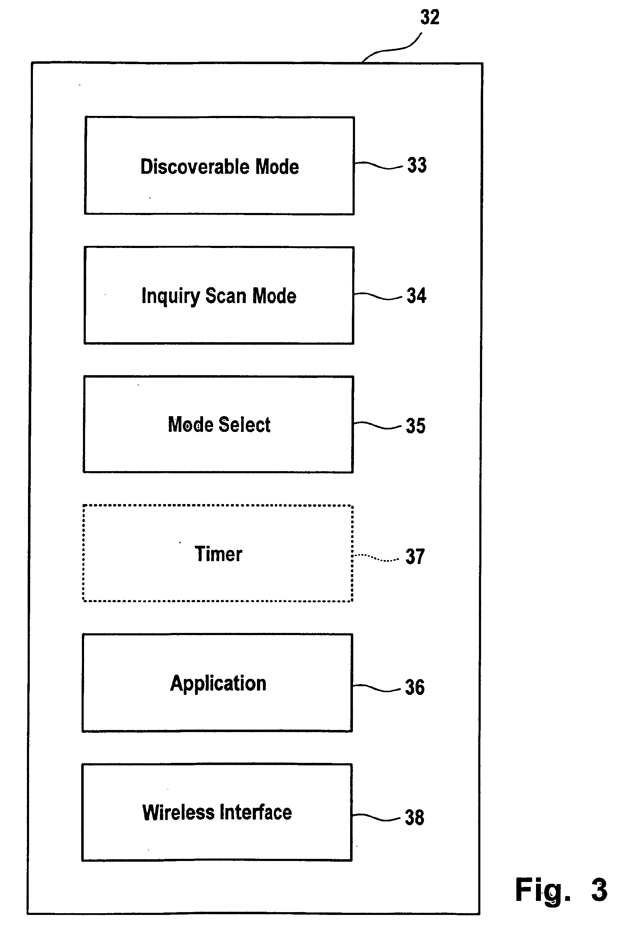

Figure 3 shows a block diagram of a mobile terminal 32. The mobile terminal can be a Bluetooth mobile communication device. The mobile terminal 32 has a module 33 to operate the mobile terminal 32 in the discoverable mode. Further the mobile terminal 32 has a module 34 to operate the mobile terminal 32 in the inquiry scan mode.

A module 35 serves to select the discoverable mode or the inquiry scan mode, i.e. the module 33 or 34.

Further the mobile terminal 32 has one or more modules 36 to run a variety of Bluetooth or other applications. Further the mobile terminal 32 has a wireless interface 38. As an option the mobile terminal 32 has a timer 37.

In operation the module 33, i.e. the discoverable mode, is selected by the module 35 as the default mode of operation. When the mobile terminal 32 is brought into a communication zone by a user a command is received from one of the access points of the communication zone by the wireless interface 38 (cf. steps 8 and 25 of figures 1 and 2, respectively). In response the module 35 selects the module 34 in order to operate the mobile terminal 32 in the inquiry scan mode. By means of the inquiry scan mode other communication devices and / or services within the proximity of the mobile terminal 32 are detected such that one or more of the applications of module 36 are invoked.

The mode of operation of the mobile terminal 32 is reset into the discoverable mode by the module 35 when the wireless interface 38 receives another command from an access point of the communication zone (cf. step 15 of figure 1). Alternatively the resetting of the mode is done based on timer 37. In this instance the selection of the module 34 by the module 35 starts the timer 37. When the timer 37 expires this is signalled to the module 35 which in response deselects module 34 and selects module 33.

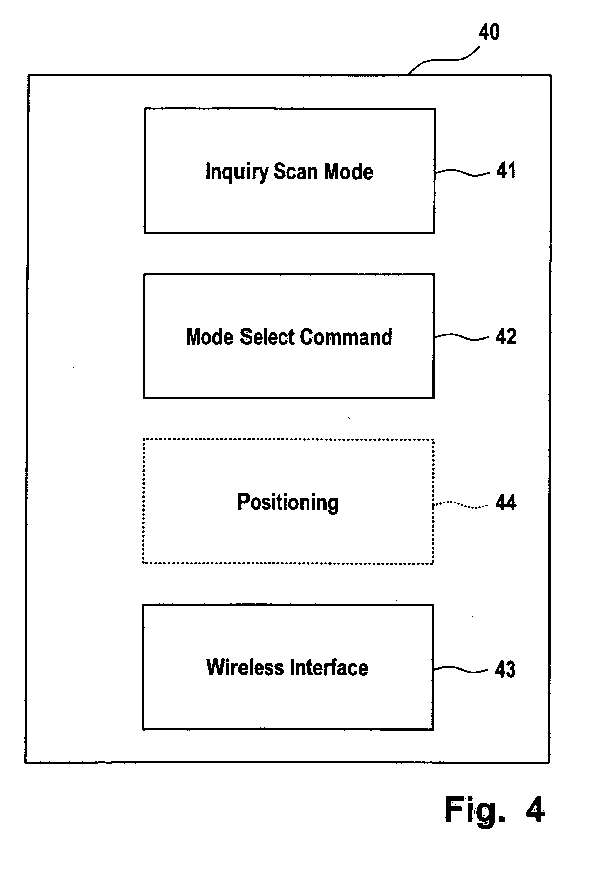

Figure 4 shows a block diagram of an access point of the communication zone. The access point 40 preferably is a fixed device which is connected to a power line. The access point 40 has a module 41 in order to operate the access point 40 in the inquiry scan mode. Further the access point 40 has a module 42 in order to generate the command to be sent to a mobile terminal entering the communication zone (cf. steps 7 and 14 of figure 1 and step 24 of figure 2). In order to perform the inquiry scan and to send the command the access point 40 has wireless interface 43.

As an option the access point 40 has a module 44 which serves to position a mobile terminal with respect to the communication zone. The module 44 can be based on the local positioning profile technique as devised in the Bluetooth specification or on another principle to determine the location of the mobile terminal, such as GPS.

In operation the command is sent via the wireless interface 43 from the access point 40 when it is detected, that a mobile terminal enters the communication zone. This detection may be performed either based on the result of the inquiry scans performed by the access point 40 by means of its module 41 and / or by means of module 44.

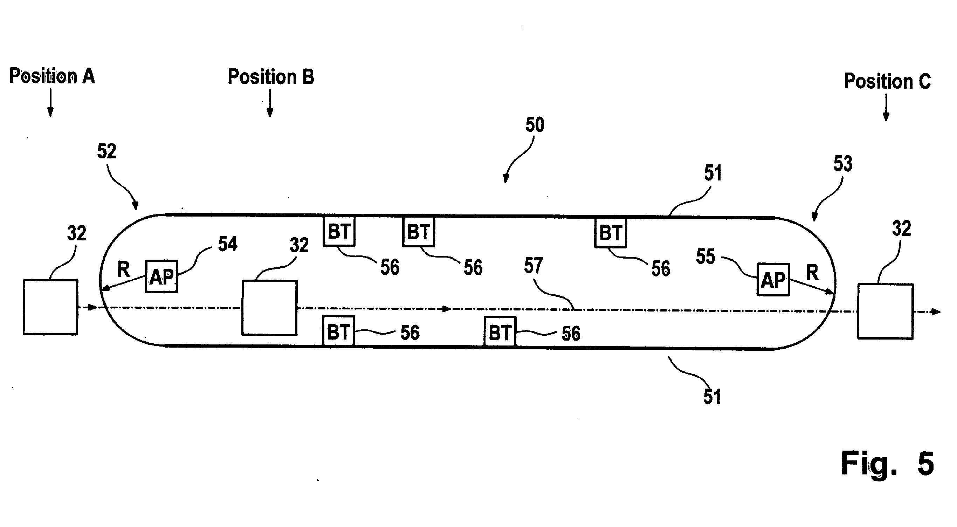

Figure 5 shows an application example for the present invention. A communication zone 50 is defined by a building 51, such as a shopping mall or commercial street. The building 51 has an entrance 52 and an exit 53. At the entrance 52 and at the exit 53 Bluetooth access points (AP) 54 and 55, respectively, are located. The wireless interfaces of these access points 54 and 55 (cf. figure 4) have a certain reach R which delimits the communication zone at the entrance 52 and the exit 53.

Within the communication zone 50 there is a number of Bluetooth service points (BT) 56.

When a mobile terminal 32 (cf. figure 3) is outside the communication zone 50 at position A the mobile terminal 32 is in its discoverable mode. In this mode the mobile terminal 32 only consumes minimal power. When the mobile terminal 32 is brought into the communication zone 50 along path 57 this is detected by the access point 54 which sends a command to the mobile terminal 32 in order to put the mobile terminal 32 into its inquiry scan mode.

In the inquiry scan mode the mobile terminal 32 recognizes one or more of the service points 56 within the communication zone 50, such as when the mobile terminal 32 is at its position B along the path 57.

When the mobile terminal 32 exits the communication zone 50 this is also detected. In one implementation the access point 55 discovers that the mobile terminal 32 leaves the communication zone 50. In response the access point 55 sends a command to the mobile terminal 32 in order to reset the discoverable mode. Alternatively the mobile terminal 32 is reset into the discoverable mode upon expiry of the timer (cf. timer 37 of figure 3).

It is to be noted that the present invention is not only applicable with respect to Bluetooth enabled devices but that a variety of alternative communication protocols can be utilized for implementation of the invention. One example for such an alternative protocol is wireless LAN.

### list of reference numerals

- process: 1
- process: 2
- mobile terminal: 3
- module: 33
- module: 34
- module: 35
- module: 36
- timer: 37
- wireless interface: 38
- access point: 40
- module: 41
- module: 42
- wireless interface: 43
- module: 44
- communication zone: 50
- building: 51
- entrance: 52
- exit: 53
- access points: 54
- access points: 55
- service points: 56
- path: 57

## Claims

1. A method for operating a mobile communication device, the method comprising the steps of:
- setting the mobile communication device into a discoverable mode,
- entering a communication zone, the zone being delimited by at least one access point, the access point being adapted to discover the mobile communication device, when the mobile communication device is in the discoverable mode,
- performing an inquiry scan in response to the entry into the communication zone in order to identify one or more other communication devices with which a communication link can be established.

2. The method of claim 1, whereby the discoverability mode is a limited discoverable mode.

3. The method of claims 1, whereby the discoverability mode is a general discoverable mode.

4. The method of anyone of claims 1, 2 or 3, the communication zone having at least one entry and the access point being located in the proximity of the entry.

5. The method of anyone of the preceding claims 1 to 4, further comprising:
- receiving a command from the access point in response to the discovery of the entry of the mobile communication device into the communication zone,
- whereby the inquiry is performed in response to the command.

6. The method of anyone of the preceding claims 1 to 5 further comprising resetting the communication device into the discoverable mode after a certain time interval.

7. The method of anyone of the preceding claims 1 to 5 further comprising resetting the communication device into the discoverable mode when it is discovered that the mobile communication device exits the communication zone.

8. A mobile communication device comprising :
- means (33) for operation in a discoverable mode,
- means (34) for performing an inquiry scan,
- means (35) for invoking the means for performing an inquiry scan when a communication zone (50) is entered, the communication zone being delimited by at least one access point (40, 54, 55), the access point being adapted to discover the mobile communication device when the mobile communication device is in the discoverable mode.

9. An access point comprising means to discover a mobile communication device (32) being in a discoverable mode when the mobile communication device enters a communication zone (50) being delimited by the access point and further comprising means for sending a command (42, 43) to the mobile communication device in response to which the mobile communication device performs an inquiry scan.

10. A communication system comprising a communication zone being delimited by at least one access point in accordance to claim 10 and further comprising at least one mobile communication device in accordance to claim 8.
